# EUROPÄISCHE PATENTSCHRIFT

(11) **EP 3 052 852 B1**
(45) Veröffentlichungstag und Bekanntmachung des Hinweises auf die Patenterteilung: **03.04.2019**
(21) Anmeldenummer: 14777621.5
(22) Anmeldetag: 01.10.2014
(51) Int. Cl.: F21S 43/14, F21S 43/239, F21S 43/245, F21S 43/249, F21S 43/30, B60Q 1/26, B60Q 1/30, B60Q 1/00

(54) **BELEUCHTUNGSVORRICHTUNG FÜR FAHRZEUGE**
LIGHTING DEVICE FOR VEHICLES
DISPOSITIF D'ÉCLAIRAGE DESTINÉ À DES VÉHICULES

(30) Priorität: 01.10.2013 DE 102013110839
(43) Veröffentlichungstag der Anmeldung: 10.08.2016
(73) Patentinhaber: HELLA GmbH & Co. KGaA, 59552 Lippstadt (DE)
(72) Erfinder: HOHMANN, Carsten, 59581 Warstein (DE); MÄKIRANTA, Antti, FI-24280 Salo (FI); MÜGGE, Martin, 59590 Geseke (DE)
(86) Internationale Anmeldenummer: PCT/EP2014/071005
(87) Internationale Veröffentlichungsnummer: WO 2015/049264

(56) Entgegenhaltungen:
- EP-A2- 0 952 388
- EP-A2- 1 176 359
- EP-A2- 1 762 433
- EP-A2- 2 080 948
- EP-A2- 2 354 637
- DE-A1-102009 035 741
- DE-A1-102011 016 416
- DE-B- 1 093 685
- DE-C- 719 930
- FR-A1- 2 894 321
- US-A1- 2006 061 994

## Beschreibung

Die Erfindung betrifft eine Beleuchtungsvorrichtung für Fahrzeuge nach dem Oberbegriff des Patentanspruchs 1.

Aus der EP 1 176 360 A2 ist eine Beleuchtungsvorrichtung für Fahrzeuge bekannt, die eine Leuchteinheit zur Erzeugung einer vorgegebenen Lichtfunktion und eine Rückstrahlereinheit zur Erzeugung einer Rückstrahllichtfunktion aufweist. Die Leuchteinheit weist als Optikeinheit eine Mehrzahl von stabförmigen Lichtleitern auf, an denen stirnseitig Lichtquellen angeordnet sind. An einer in Hauptabstrahlrichtung hinteren Mantelseite der stabförmigen Lichtleiter sind Streuoptikelemente angeordnet, so dass auf sie treffendes eingekoppeltes Licht in Hauptabstrahlrichtung umgelenkt und an einer vorderen Mantelfläche des stabförmigen Lichtleiters austritt. Die Rückstrahlereinheit weist eine Mehrzahl von streifenförmigen Rückstrahlflächen auf, die zwischen den stabförmigen Lichtleitern der Leuchteinheit angeordnet sind. Die Rückstrahlflächen sind mit den benachbarten stabförmigen Lichtleitern verbunden, so dass die Anzahl der Bauteile reduziert werden kann. Die Leuchteinheit und die Rückstrahleinheit sind somit im Wesentlichen nebeneinander angeordnet.

Aus der DE 103 59 182 A1 ist eine Beleuchtungsvorrichtung für Fahrzeuge bekannt, die eine Leuchteinheit zur Erzeugung einer vorgegebenen Lichtfunktion und eine Rückstrahleinheit zur Erzeugung einer Rückstrahlfunktion aufweist. Die Rückstrahleinheit ist in Hauptabstrahlrichtung vor einem stabförmigen Lichtleiter der Leuchteinheit angeordnet. Der Lichtleiter ist Bestandteil einer Optikeinheit, die zusätzlich einen Reflektor aufweist, an den das über eine Mantelfläche des Lichtleiters ausgekoppelte Licht hingeführt und dann mittels des Reflektors in Hauptabstrahlrichtung an der Rückstrahlereinheit vorbei abgegeben wird. Zu diesem Zweck weist der stabförmige Lichtleiter an einer in Hauptabstrahlrichtung vorderen Mantelfläche Streuoptikelemente auf, mittels derer das stirnseitig über Lichtquellen eingekoppelte Licht in Richtung des rückwärtigen Reflektors umgelenkt wird.

Vorteilhaft kann mittels des Reflektors eine Vergrößerung der Leuchtfläche zur Erzeugung der Lichtfunktion bewirkt werden. Die Fläche der Rückstrahleinheit muss hierbei jedoch ausgespart bleiben.

Aus der DE 719 930 C ist eine Beleuchtungsvorrichtung für Fahrzeuge mit einer Lichtquelle sowie einer flächigen Rückstrahleinheit bekannt, die seitlich versetzt zu der Lichtquelle angeordnet ist. Ein Flächenlichtleiter zur Erzeugung einer Lichtfunktion ist hier nicht vorgesehen.

Aus der EP 1 176 359 A2 ist eine Beleuchtungsvorrichtung für Fahrzeuge mit einer Lichtquelle sowie einer Rückstrahleinheit bekannt, wobei die Rückstrahleinheit Streuoptikelemente sowie streuoptikfreie Flächen aufweist. Die streuoptikfreien Flächen dienen als Lichtdurchlass eines von der Lichtquelle erzeugten ersten Lichtbündels zur Erzeugung der Lichtfunktion. Ein Flächenlichtleiter nach der Erfindung, der dazu dient, schmalseitig eingekoppeltes Licht zu verteilen und das Licht an bestimmten Stellen vorderseitig auszukoppeln zur Erzeugung der Lichtfunktion, ist dort nicht offenbart. Stattdessen werden in der Rückstrahleinheit streuoptikfreie Flächen dazu genutzt, das erste Lichtbündel durch die flächige Rückstrahleinheit hindurchzulassen.

Aus der FR 2 894 321 A1 ist eine Beleuchtungsvorrichtung für Fahrzeuge mit einer Lichtquelle sowie einem Flächenlichtleiter bekannt, wobei der Flächenlichtleiter an Kantenabschnitten Streuoptikelemente aufweist. Die Streuoptikelemente bewirken ein Austreten des Lichtes an dieser Stelle. Eine zusätzliche Rückstrahleinheit ist nicht vorgesehen.

Aus der DE 10 2009 035 741 A1 ist eine Beleuchtungsvorrichtung für Fahrzeuge mit einem Flächenlichtleiter bekannt, an dessen Schmalseite ein erstes Lichtbündel eingekoppelt wird. An einer hinteren Flachseite des Flächenlichtleiters sind Streuoptikelemente angeordnet, so dass das eingekoppelte Licht zu einer gegenüberliegenden vorderen Flachseite hin totalreflektiert und an der vorderen Flachseite zur Erzeugung einer Lichtfunktion ausgekoppelt werden kann. Zusätzlich dienen die Streuoptikelemente an der hinteren Flachseite dazu, ein von außen einstrahlendes Lichtbündel, das an der vorderen Flachseite eingekoppelt wird, total zu reflektieren, so dass es wieder an der vorderen Flachseite austreten kann. Hierdurch kann eine Rückstrahlfunktion erzielt werden.

Aufgabe der vorliegenden Erfindung ist es daher, eine Beleuchtungsvorrichtung für Fahrzeuge mit einer integrierten Rückstrahleinheit derart weiterzubilden, dass auf einfache Weise eine platzsparende Bereitstellung einer Licht- und Rückstrahlfunktion gewährleistet ist.

Zur Lösung dieser Aufgabe ist die Erfindung die Merkmale des Patentanspruches 1 auf.

Der besondere Vorteil der Erfindung besteht darin, dass durch Ausgestaltung eines Lichtleiters einer Leuchteinheit als Flächenlichtleiter eine Funktionsfläche bereitgestellt wird, die sowohl für die Lichtfunktion als auch für die Rückstrahlfunktion genutzt werden kann. Die Rückstrahleinheit ist in Hauptabstrahlrichtung hinter dem Flächenlichtleiter angeordnet. Da der Flächenlichtleiter nur in einem begrenzten Umfang Mittel zur Umlenkung des eingekoppelten Lichtes aufweist, kann dieser nicht nur ein erstes Lichtbündel in Hauptabstrahlrichtung zur Erzeugung der Lichtfunktion auskoppeln, sondern auch ein zweites Lichtbündel zwischen einer vorderen und hinteren Flachseite des Flachlichtleiters durchlassen für die Rückstrahlfunktion. Aufgrund der Doppelnutzung des Funktionsraumes für die Leucht- und Rückstrahlfunktion kann die Leuchteinheit verkleinert ausgebildet sein. Darüber hinaus kann hierdurch auch eine Gewichtsreduktion der Beleuchtungsvorrichtung einhergehen. Nach der Erfindung sind als Mittel zur Umlenkung des in den Flächenlichtleiter eingekoppelten Lichtes Streuoptikelemente vorgesehen, die an einer hinteren Flachseite des Flächenlichtleiters angeordnet sind. Die Streuoptikelemente sind nur partiell an der hinteren Flachseite eingebracht, so dass über glasklare bzw. streuoptikfreie Bereiche des Flächenlichtleiters die Rückstrahlfunktion stets gegeben ist. Vorteilhaft können die Streuoptikelemente bereits mit Herstellung des Flächenlichtleiters ausgeformt werden.

Nach einer Weiterbildung der Erfindung sind die Streuoptikelemente entsprechend einem vorgegebenen Muster verteilt über die hinterer Flachseite des Flächenlichtleiters angeordnet. Auf diese Weise kann sowohl eine homogene Lichtabstrahlung als auch eine homogene Rückstrahlung erfolgen.

Nach einer Weiterbildung der Erfindung sind die Streuoptikelemente entsprechend einem Streifenmuster oder einem Schachbrettmuster verteilt über die hintere Flachseite des Flächenlichtleiters angeordnet. Durch eine regelmäßige und/oder gleich verteilte Anordnung der Streuoptikelemente kann eine homogene Lichtabstrahlung bzw. Rückstrahlfunktion bereitgestellt werden.

Nach einer Weiterbildung der Erfindung sind die Streuoptikelemente durch Erodieren oder durch Ätzen oder durch Lasern auf der hinteren Flachseite des Flächenlichtleiters aufgebracht. Hierdurch können auf einfache Weise die Streuoptikelemente aufgebracht werden.

Nach einer weiteren Ausführungsform der Erfindung sind die Streuoptikelemente durch Bedruckung oder durch Lackieren auf der hinteren Flachseite des Flächenlichtleiters aufgebracht. Vorteilhaft kann hierdurch nachträglich eine gewünschtes Muster aufgebracht werden.

Nach einer weiteren Ausführungsform der Erfindung sind als Mittel zur Umlenkung des eingekoppelten Lichtes innerhalb des Flächenlichtleiters Streuoptikpartikel verteilt angeordnet. Vorzugsweise sind die Streuoptikpartikel als Nano-Partikel ausgebildet, so dass der Flächenlichtleiter im Nichtbetriebszustand der Leuchteinheit als glasklare oder nur sehr leicht diffuse Scheibe wahrgenommen wird, so dass die Rückstrahlfunktion gewährleistet ist. Befindet sich die Leuchteinheit im Betriebszustand, breitet sich das Licht in der Fläche des Flächenlichtleiters aus und wird an den Nano-Partikeln gestreut, so dass die gesamte Fläche des Flächenlichtleiters aufleuchtet. Vorteilhaft leuchtet der Flächenlichtleiter in seiner gesamten Flächen gleichmäßig auf. Es muss keine an die Rückstrahlfunktion angepasste optische Struktur oder Bedruckung aufgebracht werden. Die Nano-Partikel sind im Wesentlichen nur für die randseitige Lichteinkopplung in den Lichtleiter und die durch die Nano-Partikel erzeugte Lichtabstrahlung aus dem Lichtleiter wirksam, während sie bei einem durch die Fläche des Lichtleiters durchgehenden Lichtbündel (L2) für die Rückstrahlerfunktion nur eine geringe Streuwirkung besitzen und die Rückstrahlerfunktion dadurch nur wenig reduziert ist.

Nach einer weiteren Ausführungsform der Erfindung kann der Flächenlichtleiter aus einem ersten Material enthaltend Nano-Partikel und einem nanopartikelfreien zweiten Material bestehen. Im Betriebszustand der Leuchteinheit leuchten damit nur Flächenbereiche des Flächenlichtleiters auf, die Nano-Partikel aufweisen. Es lässt sich somit ein Muster von Lichtstreuung entlang des Flächenlichtleiters erstellen, wie es bei Bearbeitung der hinteren Seite des Flächenlichtleiters entsprechend der anderen Ausführungsform der Erfindung bereitgestellt wird.

Nach einer Weiterbildung der Erfindung weist der Flächenlichtleiter randseitig einen bogenförmigen Lichteinkoppelabschnitt auf, dem mehrere Lichtquellen zugeordnet sind. Auf diese Weise können die Lichtquellen senkrecht zur Hauptabstrahlrichtung in einer Ebene angeordnet sein.

Vorteilhaft können die Lichtquellen auf einer Leiterplatte angeordnet sein, die mit weiteren Lichtquellen zur Erzeugung weiterer Lichtfunktionen bestückt ist. Vorteilhaft können hierdurch kosteneinsparend mehrere Lichtfunktionen in der Fläche bereitgestellt werden. Die Beleuchtungsvorrichtung kann hierdurch einen relativ flachen und kompakten Aufbau aufweisen.

Nach einer bevorzugten Ausführungsform der Erfindung weist die Rückstrahleinheit eine Rückstrahlfläche solcher Größe und der Flächenlichtleiter streuoptikfreie Flächen solcher Größe auf, die mindestens so groß ist, wie eine Mindestrückstrahlfläche. Auf diese Weise ist gewährleistet, dass stets eine ausreichend große Fläche für die Rückstrahlfunktion bereitgestellt wird.

Nach einer bevorzugten Ausführungsform der Erfindung ist der Flächenlichtleiter durch Spritzgießen hergestellt, wobei Streuoptikelemente mit zunehmender Entfernung zu dem Lichteinkoppelabschnitt größer oder in einer höheren Verteilungsdichte ausgebildet sind.

Vorteilhaft kann der Flächenlichtleiter zusammen mit den Streuoptikelementen in einem Schritt hergestellt werden. Dadurch, dass die Streuung mit zunehmender Entfernung von der Lichteinkopplung nach und nach größer wird, kann eine homogene Abstrahlung der Lichtfunktionen gewährleistet werden.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Fig. 1: eine Draufsicht auf eine Beleuchtungsvorrichtung,
- Fig. 2: eine perspektivische Darstellung der Beleuchtungsvorrichtung ohne eine Abdeckscheibe,
- Fig. 3: eine perspektivische Darstellung der Beleuchtungsvorrichtung mit einer abgenommenen Blende,
- Fig. 4: eine perspektivische Darstellung eines Flächenlichtleiters, einer hinter demselben angeordneten Rückstrahleinheit sowie seitlichen Leiterplatten, die mit LED-Lichtquellen bestückt sind, ohne Gehäusedarstellung,
- Fig. 5: eine Draufsicht auf den Flächenlichtleiter-Rückstrahler-Aufbau gemäß Figur 4,
- Fig. 6: eine Rückansicht des Flächenlichtleiters,
- Fig. 7: einen Schnitt durch den Flächenlichtleiter gemäß Schnittlinie VII-VII in Figur 6,
- Fig. 8: eine schematische Vorderansicht der Beleuchtungsvorrichtung mit einem Flächenlichtleiter, der eine linienförmige Streuoptikstruktur aufweist und
- Fig. 9: eine schematische Vorderansicht der Beleuchtungsvorrichtung mit einem Flächenlichtleiter, der eine schachbrettartige Streuoptikstruktur aufweist.

Eine erfindungsgemäße Beleuchtungsvorrichtung kann bspw. als eine Heckleuchte für Lastkraftwagen oder Anhänger eingesetzt werden. Alternativ kann die Beleuchtungsvorrichtung auch in Heckleuchten von Personenkraftwagen zum Einsatz kommen.

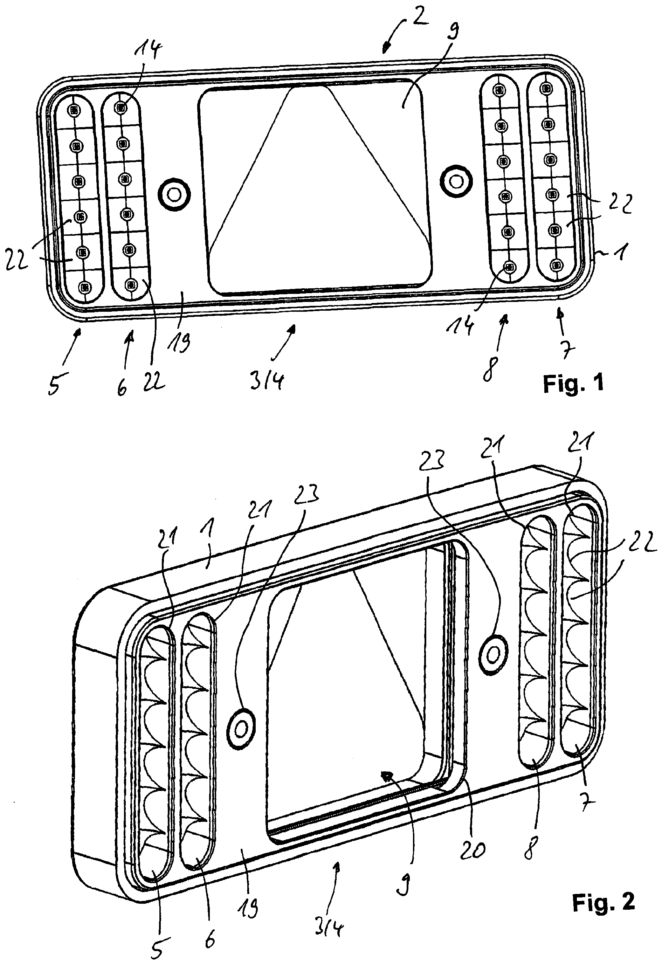

Nach einer Ausführungsform der Beleuchtungsvorrichtung gemäß den Figuren 1 bis 7 ist ein rechteckförmiges Gehäuse 1 vorgesehen, das eine relativ flache Öffnung aufweist. In der Öffnung des Gehäuses 1 ist in einem mittleren Bereich 2 eine Leuchteinheit 3 zur Erzeugung einer Schlusslichtfunktion sowie eine Rückstrahlereinheit 4 angeordnet. An gegenüberliegenden Seiten der Leuchteinheit 3 sind weitere Leuchteinheiten mit einer streifenförmigen Leuchtfläche angeordnet. Eine Bremsleuchteinheit 5 zur Erzeugung eines Bremslichtes ist an einem stirnseitigen Ende des Gehäuses 1 angeordnet. Benachbart zu der Bremsleuchteinheit 5 ist eine Blinkleuchteinheit 6 zur Erzeugung einer Richtungsanzeige angeordnet. An einem gegenüberliegenden Stirnende des Gehäuses 1 ist eine Nebelschlussleuchteinheit (7) zur Erzeugung eines Nebelschlusslichts, und benachbart zu demselben eine Rückfahrleuchteinheit zur Erzeugung eines Rückfahrlichtes angeordnet. Die Leuchteinheit 3 zur Erzeugung des Schlusslichtes weist zur flächenhaften Abstrahlung desselben einen Flächenlichtleiter 9 als Lichtleiter auf. Der Flächenlichtleiter 9 dient zugleich als Optikeinheit für die Leuchteinheit 3.

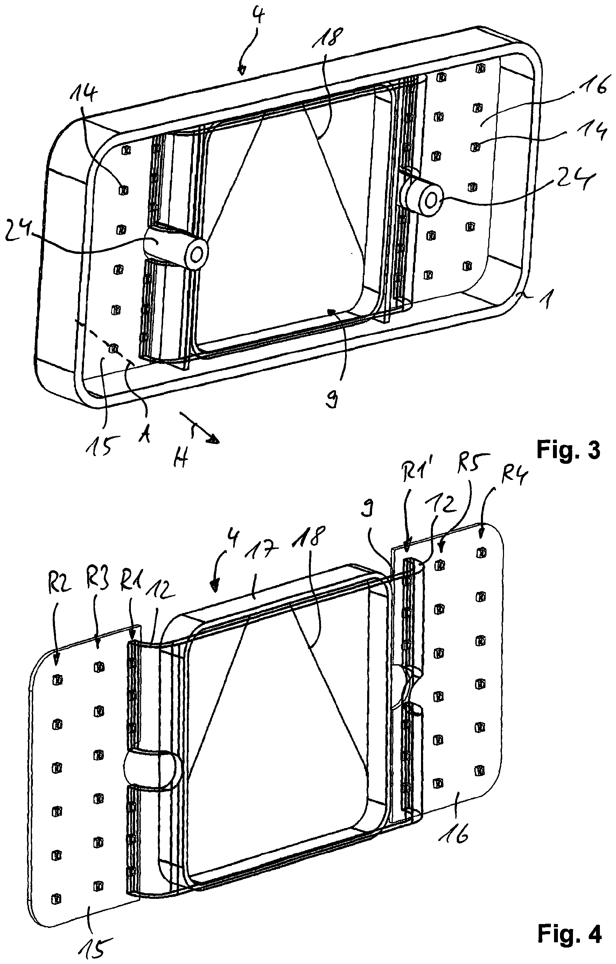

Der Flächenlichtleiter 9 ist rechteckförmig ausgebildet und weist eine in Hauptabstrahlrichtung H der Beleuchtungsvorrichtung vorne angeordnete vordere Flachseiten 10 und eine in Hauptabstrahlrichtung H hinten angeordnete hintere Flachseite 11 auf. An gegenüberliegenden Seiten schließen sich an den Flachseiten 10, 11, ein Lichteinkoppelabschnitt 12 des Flächenlichtleiters 9 an, der bogenförmig ausgebildet ist. Der Lichteinkoppelabschnitt 12 ermöglicht einen 90-Grad-Umlenkung des Flächenlichtleiters 9 an einem Rand desselben, so dass über eine an einem freien Ende des Lichteinkoppelabschnitts 12 angeordnete Schmalseite 13 des Flächenlichtleiters 9 ein erstes Lichtbündel L1 von Lichtquellen 14 in den Flächenlichtleiter 9 einkoppelbar sind, wobei die Lichtquellen 14 in einer gemeinsamen Ebene angeordnet sind und eine optische Achse A aufweisen, die parallel zur Hauptabstrahlrichtung H der Beleuchtungsvorrichtung verläuft. Wie insbesondere aus Figur 4 ersichtlich ist, sind die der Schlussleuchteinheit 3 zugeordneten Lichtquellen 14 in einer Reihe R1, R1' angeordnet. Die Reihe R1, R1' von Lichtquellen 14 ist parallel versetzt zu einer Reihe R2 von Lichtquellen 14 für die Bremsleuchteinheit 5, einer Reihe R3 von Lichtquellen 4 für die Blinklichteinheit 6, zu einer Reihe R4 von Lichtquellen 14 für die Nebelschlussleuchteinheit 7 und einer Reihe R5 von Lichtquellen 14 für die Rückfahrleuchteinheit 8 angeordnet. Die Lichtquellen 14 der Reihen R1, R2, R3 sind auf einer ersten Leiterplatte 15 und die Reihen R1', R4 und R5 auf einer zweiten Leiterplatte 16 angeordnet.

Die erste Leiterplatte 15 und die zweite Leiterplatte 16 sind in dem Gehäuse 1 unter Anlage an einem Boden desselben eingefasst angeordnet. In dem mittleren Bereich 2 zwischen der ersten Leiterplatte 15 und der zweiten Leiterplatte 16 ist die Rückstrahlereinheit 4 angeordnet, wobei ein quadratisches Gehäuse 17 der Rückfahrleuchteinheit 4 eine dreieckförmige Rückstrahlfläche 18 aufnimmt.

Die Rückstrahleinheit 4 weist eine größere Dicke auf, als die Leiterplatten 15, 16. Die Lichteinkoppelabschnitte 12 des Flächenlichtleiters 9 weisen eine solche Bogenlänge auf, dass der Flächenlichtleiter 9 mit seiner vorderen und hinteren Flachseite 10, 11 die Rückstrahleinheit 4 überdeckt bzw. in Hauptabstrahlrichtung H vor der Rückstrahleinheit 4 angeordnet ist. Zur Abgrenzung der Leuchteinheiten 3, 5, 6, 7,8 voneinander ist eine abdeckende Blende 19 vorgesehen, die in dem mittleren Bereich 2 eine quadratische Öffnung 20 und an gegenüberliegenden Enden linienförmige Öffnungen 21 aufweist. Die linienförmigen Öffnungen 21 weisen jeweils den Lichtquellen 14 der Bremsleuchteinheit 5, der Blinkleuchteinheit 6, der Nebelschlussleuchteinheit 7 und der Rückfahrleuchtleuchteinheit angepasste Reflektorsegmente 22 auf.

Die Blende 19 ist über Befestigungsmittel 23 mit dem Gehäuse 1 verbunden. Zu diesem Zweck weist das Gehäuse 1 abragende Dome 24 auf, in die das als Schraubmittel ausgebildete Befestigungsmittel 23 einschraubbar ist. Außenseitig ist die so gebildete Beleuchtungsvorrichtung mit einer transparenten nicht dargestellten Abdeckscheibe abgeschlossen.

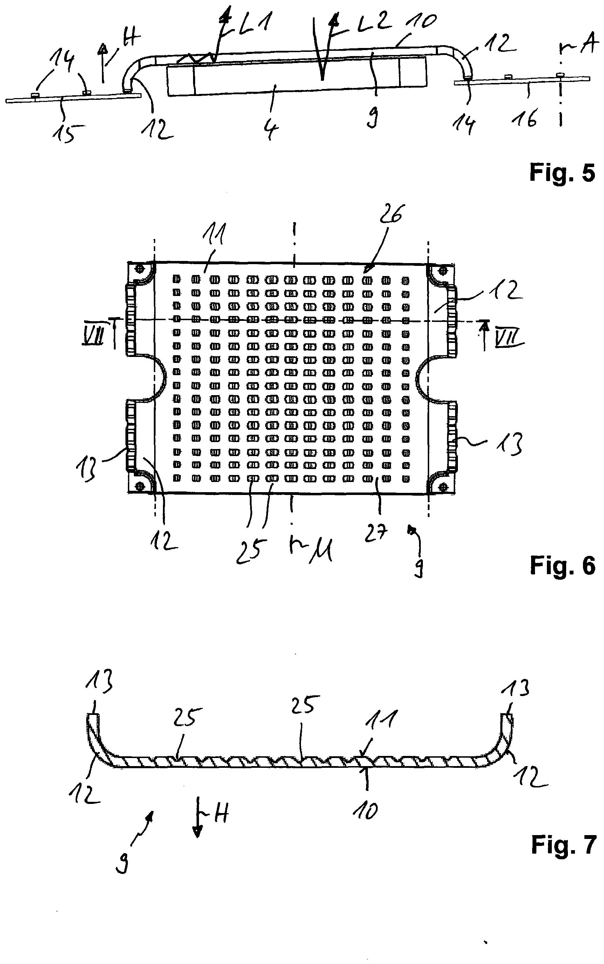

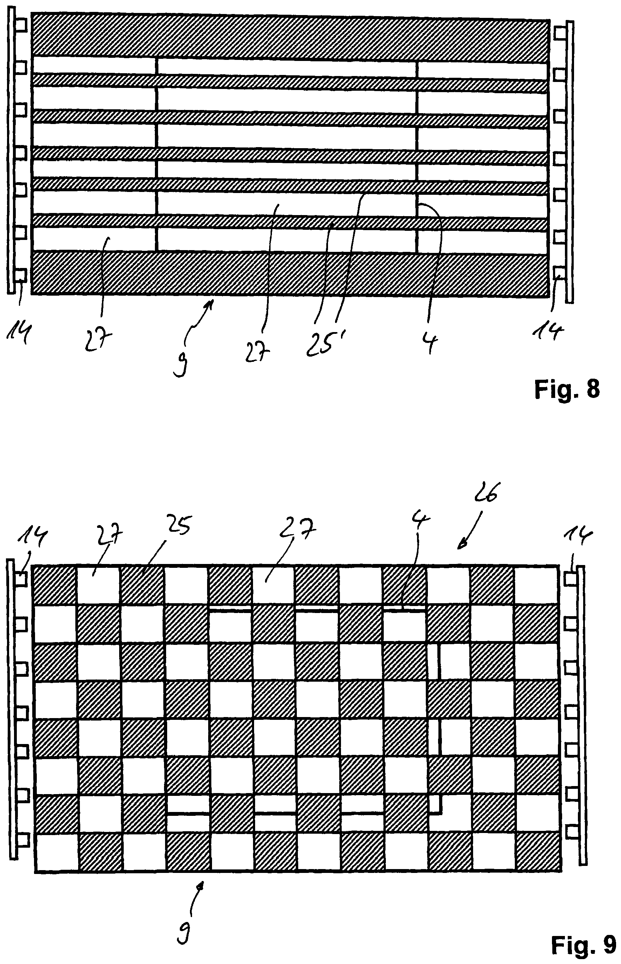

Wie insbesondere aus den Figuren 6 und 7 deutlich wird, weist die hintere Flachseite 11 des Flächenlichtleiters 9 als Mittel zur Umlenkung des über den Lichteinkoppelabschnitt 12 eingekoppelten Lichtes L1 eine Anzahl von Streuoptikelementen 25 auf, so dass bei Auftreffen des innerhalb des Flächenlichtleiters 9 durch Totalreflektion an der vorderen Flachseite 10 und der hinteren Flachseite 11 weitergeleiteten Lichtes L1 dasselbe in Richtung der vorderen Flachseite 10 umgelenkt und dann über die vordere Flachseite 10 in Hauptabstrahlrichtung H ausgekoppelt wird zur Erzeugung der Schlusslichtfunktion. Die Streuoptikelemente 25 sind in einem Schachbrettmuster 26 - wie es in Figur 9 schematisch dargestellt ist - angeordnet. Die Streuoptikelemente 25 sind als prismenförmige Einschnitte ausgebildet, deren Dimension sich mit der Entfernung zu dem Lichteinkoppelabschnitt 12 bis hin zu einer Mittelebene M des Flächenlichtleiters 9 vergrößert. Auf diese Weise wird eine über die Fläche gleichmäßige Lichtabstrahlung L1 ermöglicht.

Da die Streuoptikelemente 25 beabstandet zueinander angeordnet sind, bildet sich eine streuoptikfreie Fläche 27 an der hinteren Flachseite 11 aus, die -wie die komplett streuoptikfreie vordere Flachseite 10 - den Durchtritt eines zweiten Lichtbündels L2 ermöglicht. Das zweite Lichtbündel L2 tritt von außen durch die vordere Flachseite 10 und die streuoptikfreien Flächen 27 der hinteren Flachseite 11 des Flächenlichtleiter 9, trifft auf die Rückstrahlfläche 18 der Rückstrahleinheit 4, von der sie reflektiert wird in Richtung des Flächenlichtleiters 9, sodass das zweite Lichtbündel L2 durch die streuoptikfreie Fläche 27 der hinteren Flachseite 11 und die vordere Flachseite 10 nach außen austritt zur Erzeugung der Rückstrahlfunktion.

Die streuoptikfreie Fläche 27 der hinteren Flachseite 11 ist so groß gewählt, dass sie gleich oder größer als eine Mindestrückstrahlfläche ist. Ferner weist die Rückstrahlerfläche 18 der Rückstrahlereinheit 4 eine solche Größe auf, dass sie der Mindestrückstrahlfläche entspricht oder größer als diese ist. Auf diese Weise ist gewährleistet, dass für die Rückstrahlfunktion die gesetzlich vorgeschriebene Mindestrückstrahlfläche gewährleistet ist. Es versteht sich, dass vorzugsweise die Dimension des Flächenlichtleiters 9 größer ist als die Dimension der Rückstrahlerfläche 18.

Vorzugsweise ist der Flächenlichtleiter 9 als ein Spritzgießteil ausgebildet, wobei die Streuoptikelemente 25 in einem Schritt mit dem Flächenlichtleiter 9 hergestellt werden. Vorzugsweise ist der Flächenlichtleiter 9 und die Rückstrahlleuchtfläche 18 rot eingefärbt.

Nach einer nicht dargestellten alternativen Ausführungsform der Erfindung können die Streuoptikelemente 25 auch gleich groß ausgebildet sein, wobei die Verteilungsdichte derselben von dem Lichteinkoppelabschnitt 12 zu der Mittelebene M größer wird.

Nach einer alternativen Ausführungsform der Erfindung können die Streuoptikelemente 25 auch durch Erodieren oder durch Ätzen oder durch Lasern auf die hintere Flachseite 11 des Flächenlichtleiters 9 aufgebracht sein.

Nach einer nicht dargestellten alternativen Ausführungsform der Erfindung können die Streuoptikelemente 25 auch durch Bedruckung oder durch Lackieren auf die hintere Flachseite 11 des Flächenlichtleiters 9 aufgebracht sein.

Nach einer weiteren nicht dargestellten alternativen Ausführungsform der Erfindung können die Mittel zur Umlenkung des Lichtes L1 auch durch Streuoptikpartikel gebildet sein, die innerhalb des Flächenlichtleiters 9, also zwischen der vorderen Flachseite 10 und der hinteren Flachseite 11 angeordnet sind. Die Verteilung der Streuoptikelemente ist - nicht wie bei den vorherigen Ausführungsbeispielen - nicht auf die hintere Flachseite 11 des Flächenlichtleiters 9 beschränkt.

Vorzugsweise sind die Streuoptikpartikel als Nano-Partikel ausgebildet, deren Dimension im nm-Bereich liegen. Diese Nano-Partikel sind vorzugsweise gleich verteilt innerhalb des Flächenlichtleiters 9 angeordnet. Die Nano-Partikel sind in einer solchen Konzentration innerhalb des Flächenlichtleiters 9 die Rückstrahlung angeordnet, dass bei einer Rückstrahlung des zweiten Lichtbündels L2 durch den Flächenlichtleiter 9 nicht mehr als um 30 % reduziert wird. Auf diese Weise ist die Rückstrahlfunktion gesichert.

Es wird stets davon ausgegangen, dass das zweite Lichtbündel L2 quer zu dem Flächenlichtleiter 9 diesen durchtritt, wobei es an der vorderen Flachseite 10 bzw. hinteren Flachseite 11 gebrochen wird.

Nach einer weiteren alternativen Ausführungsform der Erfindung kann der Flächenlichtleiter auch aus einem ersten Material enthaltend die Nano-Partikel und einem zweiten Material bestehen, das nanopartikelfrei ausgebildet ist. Auf diese Weise lassen sich streuoptikfreie und streuoptikenthaltene Bereiche des Flächenlichtleiters ausbilden, so dass bspw. im Längsschnitt des Flächenlichtleiters ein Schachbrettmuster des ersten und zweiten Materials entsteht. Dieser Flächenlichtleiter kann vorzugsweise durch ein 2-Komponenten-Spritzgießvorgang hergestellt werden.

Es versteht sich, dass die Lichtquellen 14 als LED-Lichtquellen ausgebildet sind. Alternativ können auch andere Halbleiterlichtquellen eingesetzt werden.

Die Leiterplatten 15, 16 sind vorzugsweise als starre Leiterplatten ausgebildet.

In Figur 9 ist schematisch das Schachbrettmuster 26 der hinteren Flachseite 11 bestehend aus Streuoptikelementen 25 und streuoptikfreien Flächen 27 dargestellt. Bei dieser Ausführungsform kann der Flächenlichtleiter 9 als Platte ausgebildet sein, wobei die vordere Flachseite und die hintere Flachseite durch Schmalseiten miteinander verbunden sind. Das Licht L1 wird nicht - wie bei den vorhergehenden Ausführungsbeispielen - in Hauptabstrahlrichtung H, sondern quer zur Hauptabstrahlrichtung H in Längsrichtung des Flächenlichtleiters 9 einkoppelt. In Figur 9 ist die Kontur der Rückstrahlereinheit 4 eingezeichnet, die kleiner ist als der Flächenlichtleiter 9. Die den Rückstrahlerfläche 18 überdeckenden Anteile der streuoptikfreien Flächen 27 sind aber so groß, dass eine Rückstrahlfunktion gewährleistet ist.

Gleiche Bauteile bzw. Bauteilfunktionen der Ausführungsbeispiele sind mit den gleichen Bezugsziffern versehen.

Nach einer alternativen Ausführungsform der Erfindung gemäß Figur 8 sind Streuoptikelemente 25' streifenförmig auf der hinteren Flachseite 11 des Flächenlichtleiters 9 angeordnet.

Ggf. können die Streuoptikelemente 25, 25' auch ein anderes Muster, bspw. in Form eines Karo-Musters angeordnet sein. Die Streuoptikelemente selbst können als Kreisflächen, Dreiecks- oder Vielecksflächen oder in einer anderen Form ausgebildet sein.

Der mit den Nano-Partikeln durchsetzte Flächenlichtleiter wirkt in Durchsicht glasklar oder als eine leicht diffus wirkende Scheibe ohne erkennbare Struktur. Bei Beleuchtung des Flächenlichtleiters von der Schmalseite her, breitet sich das Licht in der Fläche unter Totalreflektion an der vorderen und hinteren Flachseite aus und wird an den Nano-Partikeln gestreut, so dass der gesamte Flächenlichtleiter gleichmäßig aufleuchtet. Für das quer zum Flächenlichtleiter durchtretende Licht L2 bewirken die Nano-Partikel nur eine sehr geringe Streuung, so dass die Rückstrahlfunktion gewährleistet ist.

Die Erfindung ermöglicht die platzsparende Kombination einer passiven Rückstrahlfunktion mit einer aktiven Leuchtfunktion. Die aktive Leuchtfunktion kann auch zur Erzeugung einer anderen Lichtfunktion dienen.

### Bezugszeichenliste

| | | | |
|---|---|---|---|
| 1 | Gehäuse | | |
| 2 | Mittlerer Bereich | | |
| 3 | Leuchteinheit | | |
| 4 | Rückstrahleinheit | | |
| 5 | Bremsleuchteinheit | | |
| 6 | Blinklichteinheit | | |
| 7 | Nebelschlussleuchteinheit | | |
| 8 | Rückfahrleuchteinheit | | |
| 9 | Flächenlichtleiter | | |
| 10 | Vordere Flachseite | L1, L2, | Lichtbündel |
| 12 | Hintere Flachseite | A | Achse |
| 13 | Schmalseite | M | Mittelebene |
| 14 | Lichtquellen | H | Hauptabstrahlrichtung |
| 15 | 1. Leiterplatte | R1, R1' | Reihe |
| 16 | 2. Leiterplatte | R2, R2' | Reihe |
| 17 | Gehäuse | R3, R3' | Reihe |
| 18 | Rückstrahleinheit | R4, R4' | Reihe |
| 19 | Abdeckende Blende | | |
| 20 | Quadratische Öffnung | | |
| 21 | Linienförmige Öffnungen | | |
| 22 | Reflektorsegmente | | |
| 23 | Befestigungsmittel | | |
| 24 | Dome | | |
| 25, 25' | Streuoptikelemente | | |
| 26 | Schachbrettmuster | | |
| 27 | Streuoptikfreie Fläche | | |
| | | | |
| L | Licht | | |

## Patentansprüche

1. Beleuchtungsvorrichtung für Fahrzeuge, insbesondere Heckleuchte, mit
- einer Leuchteinheit zur Erzeugung einer vorgegebenen Lichtfunktion, enthaltend eine Anzahl von Lichtquellen und eine Optikeinheit, wobei die Optikeinheit einen Lichtleiter mit Mitteln zur Umlenkung von in demselben eingekoppelten Licht der Lichtquelle aufweist, und
- einer Rückstrahleinheit zur Erzeugung einer Rückstrahlfunktion,
wobei
- der Lichtleiter als ein Flächenlichtleiter (9) ausgebildet ist und
- die Mittel zur Umlenkung des Lichtes (L1) an und/oder in dem Flächenlichtleiter (9) derart verteilt angeordnet sind, dass ein von der Lichtquelle (14) emittiertes und in eine Schmalseite (13) des Flächenlichtleiters (9) eingekoppeltes erstes Lichtbündel (L1) an einer vorderen Flachseite (10) des Flächenlichtleiters (9) ausgekoppelt wird zur Erzeugung der vorgegebenen Lichtfunktion,
**dadurch gekennzeichnet, dass**
- der Flächenlichtleiter (9) in Hauptabstrahlrichtung (H) vor der Rückstrahleinheit (4) angeordnet ist,
- ein zweites, von außen einstrahlendes Lichtbündel (L2) unter Durchtritt durch die vordere Flachseite (10) und eine hintere Flachseite (11) des Flächenlichtleiters (9) auf die Rückstrahleinheit (4) trifft und von derselben zurückreflektiert wird durch die hintere Flachseite (11) und die vordere Flachseite (10) des Flächenlichtleiters (9) in Hauptabstrahlrichtung (H) zur Erzeugung der Rückstrahlfunktion,
- als Mittel zur Umlenkung des ersten Lichtbündels (L1) an der hinteren Flachseite (11) des Flächenlichtleiters (9) eine Anzahl von Streuoptikelementen (25, 25') angeordnet ist, so dass das auf die Streuoptikelemente (25, 25') treffende eingekoppelte erste Lichtbündel (L1) in Richtung der vorderen Flachseite (10) reflektiert wird zur Auskopplung an derselben in Hauptabstrahlrichtung (H), und
- die Streuoptikelemente (25, 25') beabstandet zueinander angeordnet sind, so dass an der hinteren Flachseite (11) streuoptikfreie Flächen (27) gebildet sind für den Durchtritt des zweiten Lichtbündels (L2).

2. Beleuchtungsvorrichtung nach Anspruch 1, **dadurch gekennzeichnet, dass** die Streuoptikelemente (25, 25') entsprechend einem vorgegebenen Muster verteilt über die hinterer Flachseite (11) des Flächenlichtleiters (9) angeordnet sind.

3. Beleuchtungsvorrichtung nach Anspruch 1 oder 2, **dadurch gekennzeichnet, dass** die Streuoptikelemente (25, 25') entsprechend einem Streifenmuster oder einem Schachbrettmuster verteilt über die hintere Flachseite (11) des Flächenlichtleiters (9) angeordnet sind.

4. Beleuchtungsvorrichtung nach einem der Ansprüche 1 bis 3, **dadurch gekennzeichnet, dass** die Streuoptikelemente durch Erodieren oder durch Ätzen oder durch Lasern auf der hinteren Flachseite (11) des Flächenlichtleiters (9) aufgebracht sind.

5. Beleuchtungsvorrichtung nach einem der Ansprüche 1 bis 4, **dadurch gekennzeichnet, dass** die Streuoptikelemente durch Bedruckung oder durch Lackieren auf der hinteren Flachseite (11) des Flächenlichtleiters (9) aufgebracht sind.

6. Beleuchtungsvorrichtung nach Anspruch 1, **dadurch gekennzeichnet, dass** als Mittel zur Umlenkung des Lichts (L1) in den Flächenlichtleiter (9) Streuoptikpartikel verteilt angeordnet sind.

7. Beleuchtungsvorrichtung nach Anspruch 6, **dadurch gekennzeichnet, dass** die Streuoptikpartikel als Nano-Partikel ausgebildet sind, die gleich verteilt in dem Flächenlichtleiter (9) angeordnet sind.

8. Beleuchtungsvorrichtung nach Anspruch 7, **dadurch gekennzeichnet, dass** der Flächenlichtleiter aus einem ersten Material enthaltend die Nano-Partikel und einem nanopartikelfreien zweiten Material besteht.

9. Beleuchtungsvorrichtung nach Anspruch 8, **dadurch gekennzeichnet, dass** der Flächenlichtleiter durch 2-Komponenten-Spritzgießen hergestellt ist.

10. Beleuchtungsvorrichtung nach einem der Ansprüche 1 bis 9, **dadurch gekennzeichnet, dass** der Flächenlichtleiter (9) randseitig einen bogenförmigen Lichteinkoppelabschnitt (12) aufweist, der die lichteinkoppelnde Schmalseite (13) aufweist, und dass der Schmalseite (13) mehrere Lichtquellen (14) zugeordnet sind, deren optische Achsen (A) in Hauptabstrahlrichtung (H) verlaufen.

11. Beleuchtungsvorrichtung nach einem der Ansprüche 1 bis 10, **dadurch gekennzeichnet, dass** der Lichteinkoppelabschnitt (12) durch eine Blende 11. (19) abgedeckt ist.

12. Beleuchtungsvorrichtung nach einem der Ansprüche 1 bis 11, **dadurch gekennzeichnet, dass** die Lichtquellen (14) auf einer Leiterplatte (15, 16) angeordnet sind, die mit weiteren Lichtquellen (14) zur Erzeugung weiterer Lichtfunktionen bestückt ist.

13. Beleuchtungsvorrichtung nach einem der Ansprüche 1 bis 12, **dadurch gekennzeichnet, dass** der Flächenlichtleiter (9) und/oder die Rückstrahlfläche (18) rot eingefärbt sind.

14. Beleuchtungsvorrichtung nach einem der Ansprüche 1 bis 13, **dadurch gekennzeichnet, dass** die Rückstrahleinheit (4) eine Rückstrahlfläche (18) solcher Größe und dass der Flächenlichtleiter (9) eine streuoptikfreie Fläche (27) solcher Größe aufweist, die einer Mindestrückstrahlfläche entspricht oder die die Mindestrückstrahlfläche übersteigt.

15. Beleuchtungsvorrichtung nach einem der Ansprüche 1 bis 14, **dadurch gekennzeichnet, dass** die Flachseiten (10, 11) des Flächenlichtleiters (9) eine größere Dimension aufweisen als die Rückstrahlfläche (18) der Rückstrahleinheit (4).

16. Beleuchtungsvorrichtung nach einem der Ansprüche 1 bis 4, **dadurch gekennzeichnet, dass** der Flächenlichtleiter (9) durch Spritzgießen hergestellt ist und dass die Streuoptikelemente (25, 25') mit zunehmender Entfernung zum Lichteinkoppelabschnitt (12) größer oder in höherer Verteilungsdichte angeordnet sind, so dass das erste Lichtbündel (L1) homogen von dem Flächenlichtleiter (9) abgestrahlt wird zur Erzeugung der Lichtfunktion.

## Claims

1. Lighting device for vehicles, in particular rear lamp, having
- a light unit for the generation of a given light function, comprising a number of light sources and an optics unit, wherein the optics unit has a light guide with means of deflection for light of the light source coupled into the same, and
- a reflex reflector unit for the generation of a reflex reflector function,
wherein
- the light guide is embodied as a low profile light guide (9) and
- the means for the deflection of the light (L1) are arranged in a distributed manner on and/ or in the low profile light guide (9), that a first light beam (L1) emitted by the light source (14) and coupled into a narrow side (13) of the low profile light guide (9) is coupled out of a front narrow side (10) of the low profile light guide (9) to generate the given light function,
**characterized in that**
- the low profile light guide (9) is arranged in the main radiation direction (H) in front of the reflex reflector unit (4),
- a second light beam (L2) radiating in from the outside passes through the front flat side (10) and a rear flat side (11) of the low profile light guide (9), hits the reflex reflector unit (4), and is reflected back in the main radiation direction (H) from the same through the rear flat side (11) and the front flat side (10) of the low profile light guide (9) to generate the reflex reflector function,
- a number of diffusion optics elements (25, 25') are arranged on the rear flat side (11) of the low profile light guide (9) as a means for deflection of the first light beam (L1), so that the coupled-in first light beam (L1) hitting the diffusion optics elements (25, 25') is reflected in the direction of the front flat side (10) for the coupling out from the same in the main radiation direction (H), and
- the diffusion optics elements (25, 25') are arranged at a distance relative to one another, so that diffusion optics-free faces (27) are formed on the rear flat side (11) for the passing of the second light beam (L2).

2. Lighting device according to Claim 1, **characterized in that**
the diffusion optics elements (25, 25') are arranged in a distributed manner according to a given pattern on the rear flat side (11) of the low profile light guide (9).

3. Lighting device according to Claim 1 or 2, **characterized in that**
the diffusion optics elements (25, 25') are arranged in a stripe pattern or a checker board pattern on the rear flat side (11) of the low profile light guide (9).

4. Lighting device according to one of the Claims 1 to 3, **characterized in that**
the diffusion optics elements are applied to the rear flat side (11) of the low profile light guide (9) by means of eroding or by etching or lasing.

5. Lighting device according to one of the Claims 1 to 4, **characterized in that**
the diffusion optics elements are applied to the rear flat side (11) of the low profile light guide (9) by means of printing or by painting.

6. Lighting device according to Claim 1, **characterized in that**
diffusion optics particles are arranged in a distributed manner in the low profile light guide (9) as a means of deflection of the light (L1).

7. Lighting device according to Claim 6, **characterized in that**
the diffusion optics particles are embodied as nano-particles, which are arranged evenly distributed in the low profile light guide (9).

8. Lighting device according to Claim 7 **characterized in that**
the low profile light guide consists of a first material containing the nano-particles and a second material which is nano-particle-free.

9. Lighting device according to Claim 8, **characterized in that**
the low profile light guide is produced by means of two-component injection molding.

10. Lighting device according to one of the Claims 1 to 9, **characterized in that**
the low profile light guide (9) has, on its edge, a curved section for the coupling-in of light (12) having the narrow side (13) for the coupling-in of the light, and that the narrow side (13) has assigned several light sources (14), whose optical axes (A) run in the main radiation direction (H).

11. Lighting device according to one of the Claims 1 to 10, **characterized in that**
the section for the coupling-in of light (12) is covered by a bezel (19).

12. Lighting device according to one of the Claims 1 to 11, **characterized in that**
the light sources (14) are arranged on a printed circuit board (15, 16) being equipped with further light sources (14) for the generation of other light functions.

13. Lighting device according to one of the Claims 1 to 12, **characterized in that**
the low profile light guide (9) and/ or the reflex reflector face (18) are tinted red.

14. Lighting device according to one of the Claims 1 to 13, **characterized in that**
the reflex reflector unit (4) has a reflex reflector surface (18) and the low profile light guide (9) has a dispersion-optics-free surface (27), both surfaces corresponding to a minimum reflex reflector surface or exceeding the minimum reflex reflector surface.

15. Lighting device according to one of the Claims 1 to 14, **characterized in that**
the narrow sides (10, 11) of the low profile light guide (9) have larger dimensions than the reflex reflector surface (18) of the reflex reflector unit (4).

16. Lighting device according to one of the claims 1 to 4, **characterized in that** the low profile light guide (9) is produced by means of injection molding and that the dispersion optics elements (25, 25') are larger or have a higher concentration the larger their distance is relative to the section for the coupling-in of light (12), so that the first light beam (L1) is homogeneously radiated from the low profile light guide (9) for the generation of the light function.

## Revendications

1. Dispositif d'éclairage pour véhicules, en particulier un feu arrière avec
- une unité d'éclairage destinée à engendrer une fonction lumineuse prescrite, contenant un certain nombre de sources lumineuses et une unité optique, l'unité optique présentant un guide de lumière avec des moyens de déviation de la lumière de la source lumineuse couplée dans celui-ci et
- une unité de catadioptre générant une fonction catadioptre,
- le guide de lumière étant réalisé sous forme d'un guide de lumière surfacique (9) et
- les moyens de déviation de la lumière (L1) étant repartis sur et/ou dans le guide de lumière surfacique (9) de telle manière qu'un premier faisceau lumineux (L1) émis par la source de lumière (14) et couplé dans un côté étroit (13) du guide de lumière surfacique (9) soit découplé sur un côté plat avant (10) du guide de lumière surfacique (9) pour engendrer la fonction lumineuse prescrite,
**caractérisé en ce**
- **que** le guide de lumière surfacique (9) est disposé dans la direction principale de rayonnement (H) en amont de l'unité de catadioptre (4),
- **qu'**un deuxième faisceau lumineux (L2) provenant de l'extérieur tombe sur l'unité de catadioptre (4) en traversant le côté plat avant (10) et un côté plat arrière (11) du guide de lumière surfacique (9) et sera rétro-réfléchi par cette dernière à travers le côté plat arrière (11) et le côté plat avant (10) du guide de lumière surfacique (9) dans la direction principale de rayonnement (H) pour générer la fonction de catadioptre,
- **qu'**un certain nombre des éléments optiques à diffusion (25, 25') sont disposés en tant que moyen de déviation du premier faisceau lumineux (L1) sur le côté plat arrière (11) du guide de lumière surfacique (9) de sorte que le premier faisceau lumineux couplé (L1) tombant sur les éléments optiques à diffusion (25, 25') soit réfléchi dans la direction du côté plat avant (10) pour le découplage sur celui-ci dans la direction principale de rayonnement (H) et
- les éléments optiques à diffusion (25, 25') sont disposés de manière espacée les uns par rapport aux autres de sorte que des surfaces sans optique à diffusion (27) soient formées sur le côté plat arrière (11) pour le passage du deuxième faisceau lumineux (L2).

2. Dispositif d'éclairage selon la revendication 1, **caractérisé en ce que** les éléments optiques à diffusion (25, 25') sont repartis selon un schéma donné sur le côté plat arrière (11) du guide de lumière surfacique (9).

3. Dispositif d'éclairage selon la revendication 1 ou 2, **caractérisé en ce que** les éléments optiques à diffusion (25, 25') sont repartis selon une configuration à rayures ou une configuration en damier sur le côté plat arrière (11) du guide de lumière surfacique (9).

4. Dispositif d'éclairage selon l'une des revendications 1 à 3, **caractérisé en ce que** les éléments optiques à diffusion sont apportés sur le côté plat arrière (11) du guide de lumière surfacique (9) par érosion, gravure ou laser.

5. Dispositif d'éclairage selon l'une des revendications 1 à 4, **caractérisé en ce que** les éléments optiques à diffusion sont apportés sur le côté plat arrière (11) du guide de lumière surfacique (9) par impression ou par vernissage.

6. Dispositif d'éclairage selon la revendication 1, **caractérisé en ce que** des particules optiques à diffusion sont repartis en tant que moyens de déviation de la lumière (L1) dans le guide de lumière surfacique (9).

7. Dispositif d'éclairage selon la revendication 6, **caractérisé en ce que** les particules optiques à diffusion sont réalisées en tant que nanoparticules qui sont reparties uniformément dans le guide de lumière surfacique (9).

8. Dispositif d'éclairage selon la revendication 7, **caractérisé en ce que** le guide de lumière surfacique est composé d'une première matière contenant les nanoparticules et d'une seconde matière exempte de nanoparticules.

9. Dispositif d'éclairage selon la revendication 8, **caractérisé en ce que** le guide de lumière surfacique est fabriqué par moulage par injection à deux composants.

10. Dispositif d'éclairage selon l'une des revendications 1 à 9, **caractérisé en ce que** le guide de lumière surfacique (9) présente sur le bord une partie de couplage de la lumière en forme d'arc (12) qui présente le côté étroit de couplage de la lumière (13) et que plusieurs sources de lumière (14) sont attribuées au côté étroit (13) dont les axes optiques (A) s'étendent dans la direction principale de rayonnement (H).

11. Dispositif d'éclairage selon l'une des revendications 1 à 10, **caractérisé en ce que** la partie de couplage de la lumière (12) est couverte par un masque (19).

12. Dispositif d'éclairage selon l'une des revendications 1 à 11, **caractérisé en ce que** les sources de lumière (14) sont disposées sur un circuit imprimé (15, 16) qui est équipé d'autres sources de lumière (14) pour engendrer d'autres fonctions d'éclairage.

13. Dispositif d'éclairage selon l'une des revendications 1 à 12, **caractérisé en ce que** le guide de lumière surfacique (9) et/ou la surface catadioptre (18) sont colorés en rouge.

14. Dispositif d'éclairage selon l'une des revendications 1 à 13, **caractérisé en ce que** l'unité de catadioptre (4) présente une surface catadioptre (18) d'une telle dimension et que le guide de lumière surfacique (9) présente une surface sans optique à diffusion (27) d'une telle dimension correspondant à une surface catadioptre minimale ou dépassant la surface catadioptre minimale.

15. Dispositif d'éclairage selon l'une des revendications 1 à 14, **caractérisé en ce que** les côtés plats (10, 11) du guide de lumière surfacique (9) présentent une dimension plus élevée que la surface catadioptre (18) de l'unité de catadioptre (4).

16. Dispositif d'éclairage selon l'une des revendications 1 à 4, **caractérisé en ce que** le guide de lumière surfacique (9) est fabriqué par moulage par injection et que les éléments optiques à diffusion (25, 25') sont disposés à une densité de répartition plus grande ou plus élevée avec l'augmentation de la distance par rapport à la partie de couplage de la lumière (12) de sorte que le premier faisceau lumineux (L1) soit émis de manière homogène du guide de lumière surfacique (9) pour engendrer la fonction d'éclairage.
